# EUROPEAN PATENT SPECIFICATION

(11) **EP 1 328 435 B1**
(45) Date of publication and mention of the grant of the patent: **03.11.2004**
(21) Application number: 00967906.9
(22) Date of filing: 24.10.2000
(51) Int. Cl.: B62J 9/00

(54) **MOTORBIKE TRANSPORT CASE COMPRISING A HATCH**
MOTORRADKOFFER MIT LUKE
MALLETTE DE TRANSPORT POUR MOTO, COMPRENANT UNE TRAPPE

(43) Date of publication of application: 23.07.2003
(73) Proprietor: GI.VI. s.r.l., 25020 Flero (BS) (IT)
(72) Inventor: VISENZI, Vincenzo, I-25086 Rezzato (IT)
(74) Representative: Rothkopf, Ferdinand, Dipl.-Ing.
(86) International application number: PCT/EP2000/010447
(87) International publication number: WO 2002/034613

(56) References cited:
- FR-A- 1 052 572
- US-A- 3 788 532
- PATENT ABSTRACTS OF JAPAN vol. 2000, no. 11, 3 January 2001 (2001-01-03) & JP 2000 225978 A (YEC:KK), 15 August 2000 (2000-08-15)

## Description

The invention relates to a motorbike transport case comprising:
- a base shell arranged to be fitted to a motorbike or a carrier plate mounted on a motorbike; and
- a cover shell hinged to the base shell such that the cover shell can be pivoted away from the base shell to open the transport case and pivoted toward the base shell to close the transport case.

A transport case of this type is described in EP-B1-0 370 368 or EP-B1-0517 265, for example. Another example of a travel case for a motorbike is described in US patent 3 788 532, the case being arranged to be attached to a stationary baggage container of the motorbike. JP-A-2000 225978 describes a motorbike transport case having two access lids. FR-A-1 052 572 discloses a bicycle bag comprising two acess openings.

As has been well-known in the art, a transport case that can be fitted to a motorbike provides obvious benefit to the user in that such a case allows the user to transport commodities while having his hands free for controlling the motorbike. If the transport case is fitted detachably to the motorbike, the versatility of the transport case is enhanced in that the user may employ such a case either separately from the motorbike, e.g. while walking as a pedestrian or working in an office, or in a fitted state, i.e. when driving the motorbike to which the transport case has been fitted so that the user does not have to hold the case manually.

While conventional transport cases thus provide considerable convenience, the opening function of the transport case may be sometimes cumbersome to the user in situations where the transport case is heavy or only limited space is available for pivoting the cover shell.

It is therefore an object of the invention to further enhance the functionality and comfort of the motorbike transport case. More specifically, it is an object of the invention to facilitate a user's access to the interior of the transport case in situations where the transport case is heavy or space for pivoting the cover shell is limited.

According to the invention, this object is achieved by the following additional features:
- a hatch provided in the cover shell, and
- a hatch lid hinged to the cover shell such that the hatch lid can be pivoted away from the hatch to open the hatch and pivoted toward the hatch to close the hatch.

The hatch provided in the cover shell provides the user easy access to the interior of the transport case. This convenient access is particularly useful in situations where it is not easy for the user to handle the transport case in view of its weight or bulk, or when relatively small items are to be introduced into, or taken out of, the transport case without having to open the large cover shell. Small items can be introduced or withdrawn speedily, thus providing the user with an additional degree of freedom. Where the transport case is used as a side case to be opened laterally, stored commodities can be prevented from falling out if only the hatch lid is opened rather than the entire cover shell.

As the hatch is provided in the cover shell of the transport case, the additional access is ensured through the same pivotable shell that also provides the conventional access whereas the base shell can be kept stationary to safely hold the contents.

Since the hatch lid is hinged to the cover shell of the transport case, the lid hinge and hatch are arranged on the same shell, namely on the cover shell, to facilitate the design, manufacture and use of the transport case.

To prevent unauthorised access to the transport case through the hatch, the hatch lid can be advantageously locked in the closed state obstructing the hatch. The lid locking mechanism may comprise a pivotable or rockable hook arranged to selectively hook the hatch lid to the hatch and unhook the hatch lid from the hatch. The lid locking mechanism may be releasable by a key or combination lock, preferably by a combination lock comprising a plurality of numbered thumb wheels.

To complete the security aspect, the transport case may be additionally provided with a conventional cover locking mechanism, preferably operable by a key, said cover locking mechanism arranged to selectively lock and unlock the cover shell with respect to the base shell.

In particular when the hatch and hatch lid are arranged on a top portion of the transport case, the edge of the hatch and the edge of the hatch lid advantageously engage each other in the closed state of the hatch such as to provide a sealing to prevent water from penetrating into the transport case.

For reasons of safety and aesthetics, the hatch lid may be hinged to the hatch by one or more hinges which in the closed state of the hatch are flush with the outline of the transport case. A hinge countersunk in the surface of the transport case does not only contribute to an attractive design, but the hinge is also less vulnerable to burglary, is less likely to cause injuries to people passing by, and allows the transport case to be cleaned more easily.

While the present hatch design has been developed primarily for a transport case to be fitted to a lateral structure of a motorbike, the advantages of the transport case according to the invention can be achieved both for side cases and top cases, i.e. irrespectively of whether the base shell is fitted to a lateral or vertical structure or to a top or horizontal structure of the motorbike. Generally, either a horizontal wall or a vertical wall of the base shell may be fitted to the motorbike. Within the meaning of the subject application, the base shell fitted to the motorbike constitutes a "bottom shell".

Therefore, the term "bottom shell" is limited neither to a lower nor horizontal type of base shell.

Further, the additional hatch suggested by the present invention is applicable both to a cover shell arranged on top of the base shell and to a cover shell arranged on a lateral side of the base shell. Generally, the base shell and cover shell may be arranged either above or beside each other, with the base shell being fitted to a support structure (e.g. the rack or an intermediate carrier plate) of the motorbike and the cover shell being pivotable with respect to the base shell. A hatch arranged in a top portion of the transport case provides maximum load capacity of the base and cover shells.

Likewise, the abovementioned advantages can be achieved irrespectively of whether or not the transport case is fitted to the motorbike in a detachable manner, even though a conventional detachable fitting is preferred for reasons of versatility. The base shell of the transport case may be provided with mechanical means for fitting and locking the base shell detachably to a structure (e.g. rack) of the motorbike. If the base shell is fitted detachably on a standardised carrier plate arranged to be mounted on (the rack of) a motorbike, the transport case can be retrofitted more easily and efficiently to an existing motorbike.

### Brief Description of the Drawings

- Figure 1: shows the transport case in the closed state thereof,
- Figure 2: shows the transport case with an open access hatch,
- Figure 3: shows the transport case with the access hatch closed and a cover shell open,
- Figure 4: shows the transport case with both the access hatch and cover shell open,
- Figure 5: shows the complete transport case comprising a number of components and with the access hatch closed,
- Figure 6: shows the complete transport case with the access hatch open,
- Figure 7: shows an assembled combination lock,
- Figure 8: shows the disassembled combination lock,

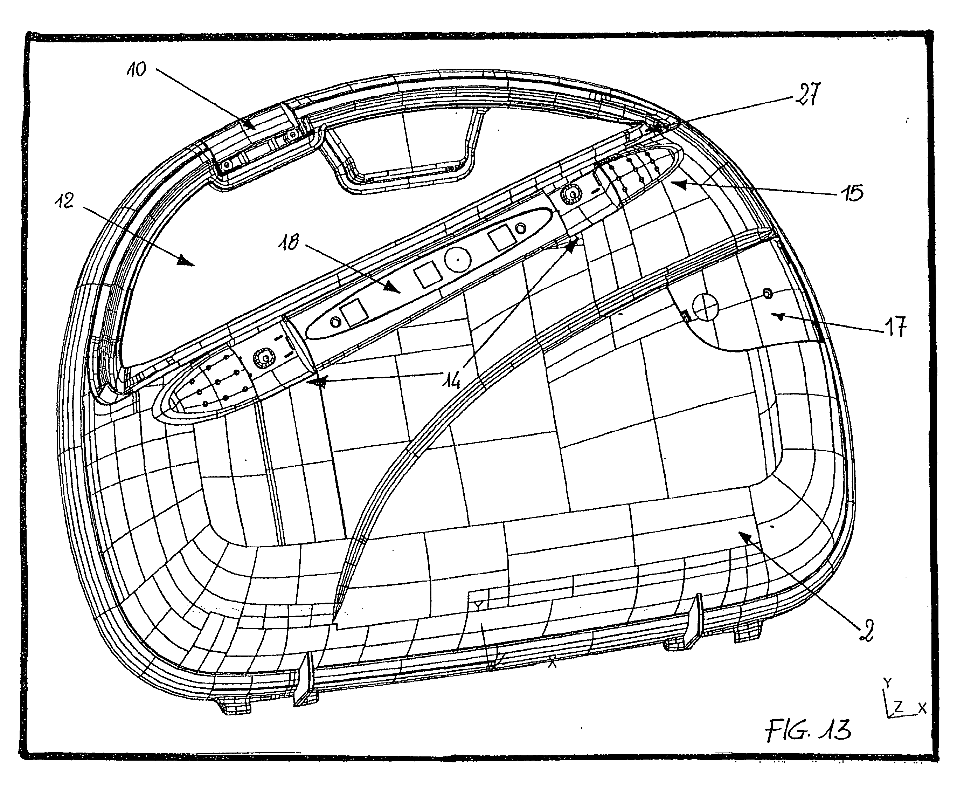

- Figure 9: shows a detail of the hatch lid,
- Figure 10: shows a detail of the hatch lid and of the combination lock in the locked position thereof,
- Figure 11: shows a detail of the hatch lid and of the combination lock in the open position thereof,
- Figure 12: shows the hatch lid as seen from inside the case, and
- Figure 13: shows the cover shell without accessories.

### Detailed Description of a Preferred Embodiment

An exemplary embodiment of the transport case according to the invention will be described in greater detail with reference to the drawings.

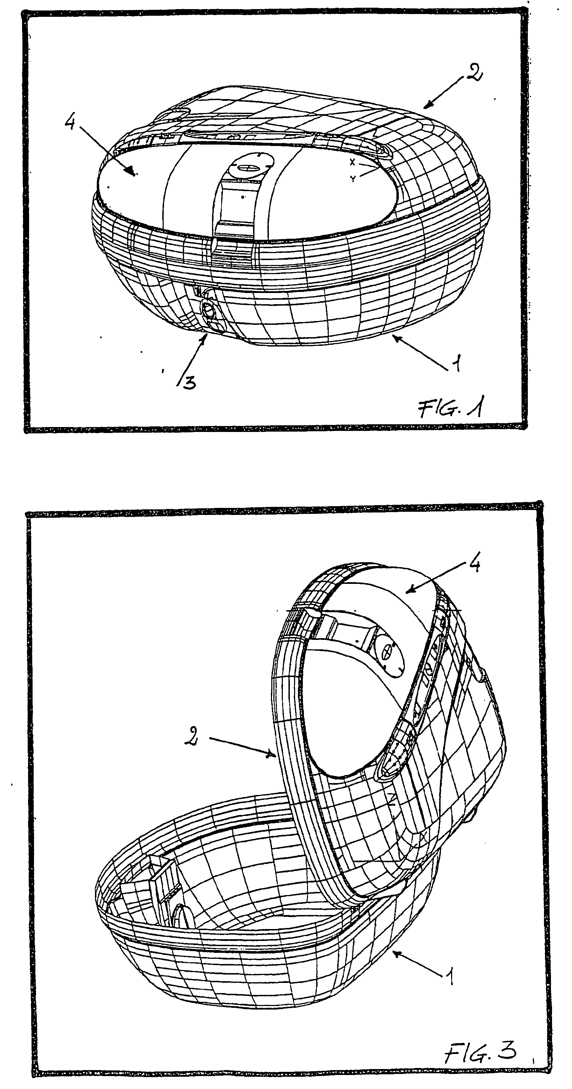

Figure 1 shows a schematic perspective view of a transport case arranged to be fitted, preferably in a releasable manner, to a support structure of a motorbike (the term motorbike including motorscooters). The transport case is preferably attached to a lateral surface of a support structure ("side case"), but the principles of the invention apply equally to a transport case to be fitted on a top surface ("top case"). Likewise, the transport case is not restricted to being fitted to any specific structure of a motorbike. The invention envisages transport cases for use on lateral, rear or front structures of a motorbike.

The transport case comprises a base shell 1 which is sometimes referred to as the bottom shell (although the base shell 1 is not necessarily the lower part of the transport case). The transport case further comprises a cover shell 2 which is sometimes referred to as the top shell (although the cover shell 2 is not necessarily the upper part of the transport case). The present application contemplates arrangements in which the base shell 1 may be fitted in any orientation (e.g. substantially vertically or horizontally) to a motorbike. Incidentally, uniform use of the term "shell" herein for both the base shell 1 and cover shell 2 does not imply that the base and cover shells 1 and 2 of the transport case have to have the same size or shape. The base shell 1 and/or cover shell 2 may be preferably made of polypropylene.

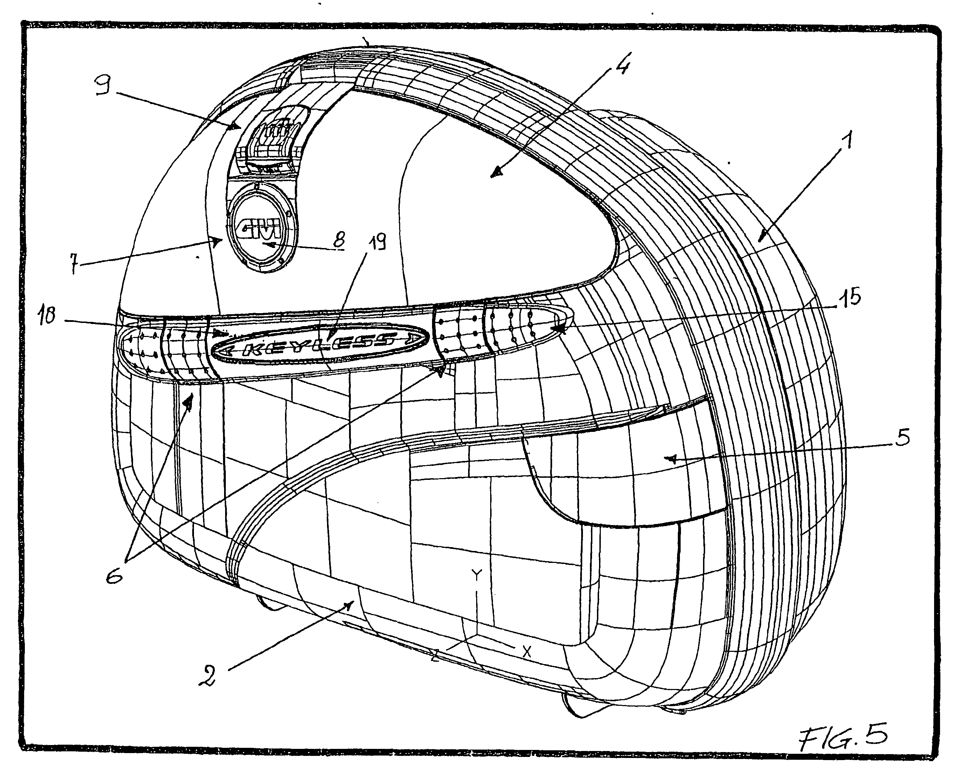

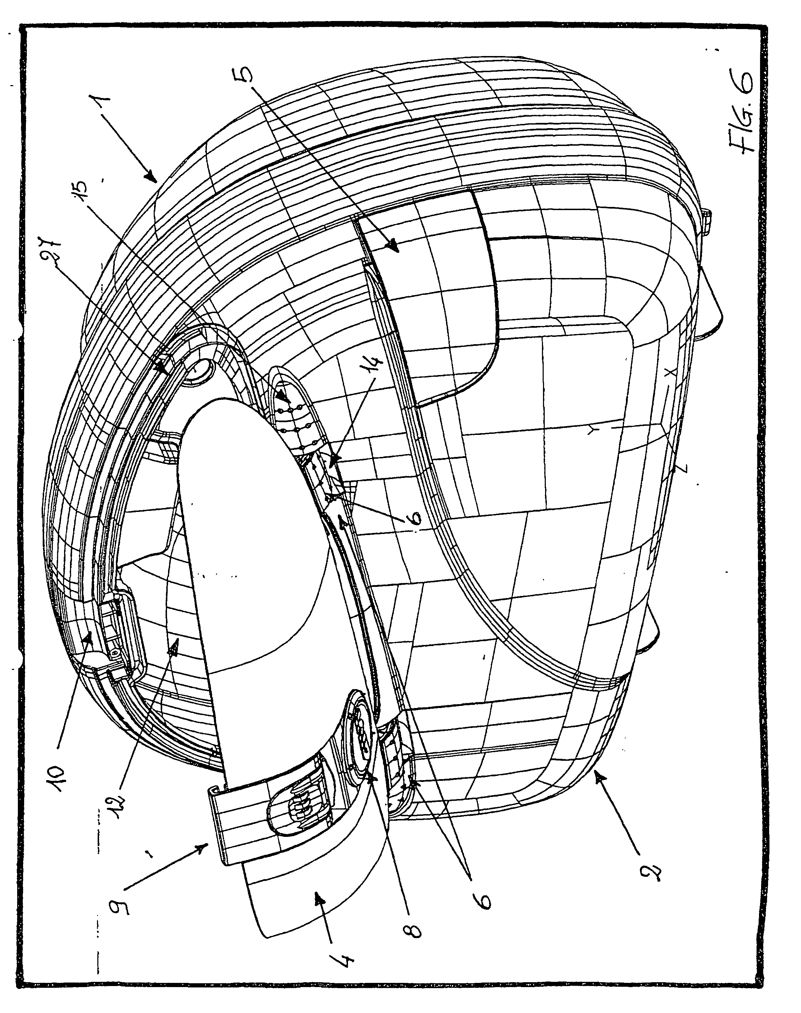

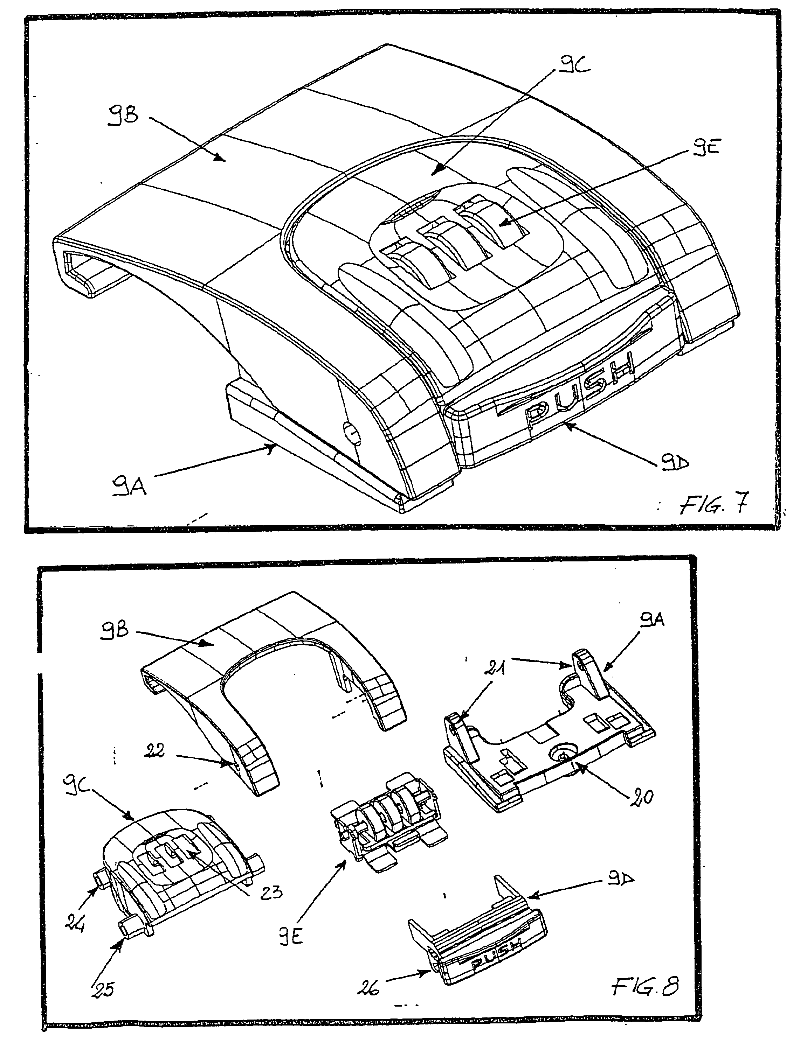

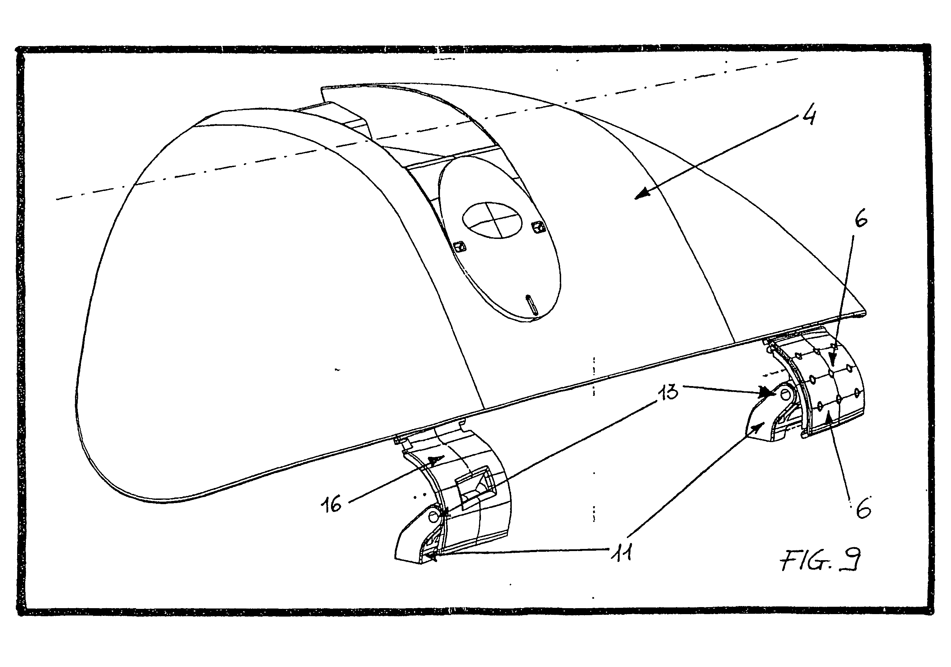

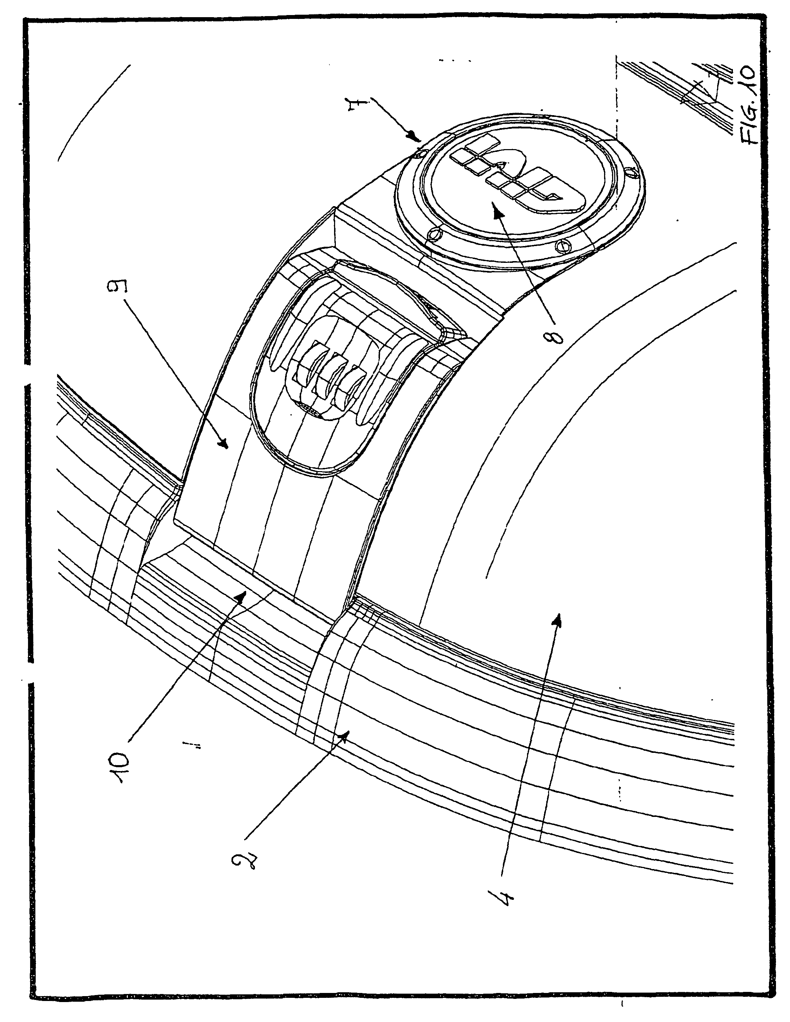

The cover shell 2 is hinged to the base shell 1 such that the cover shell 2 is pivotable with respect to the base shell 1, e.g. about a horizontal axis or a vertical axis, to open the transport case as shown in Figure 3 once a cover locking mechanism 3 has been unlocked e.g. by tuming a key. Conversely, the transport case can be closed to the position shown in Figure 1 by pivoting the cover shell 2 toward the base shell 1 where the cover shell 2 can be held in place and locked by the cover locking mechanism 3.

Preferably, the cover locking mechanism 3 may also be arranged to selectively lock and unlock a fitting mechanism for fitting the base shell 1 detachably to a support structure of a motorbike. The support structure may be formed by a rack of the motorbike itself or by a standardised carrier plate additionally mounted (possibly retrofitted) to the motorbike. The support structure and base shell 1 are arranged to match each other so that the base shell 1 can be fitted and secured to the support structure when the transport case is to be fitted, or attached, to the motorbike. To this end, the support structure may comprise a conventional fitting extension protruding from the surface of the support structure and adapted to be caught in a base aperture of the bottom wall of base shell 1.

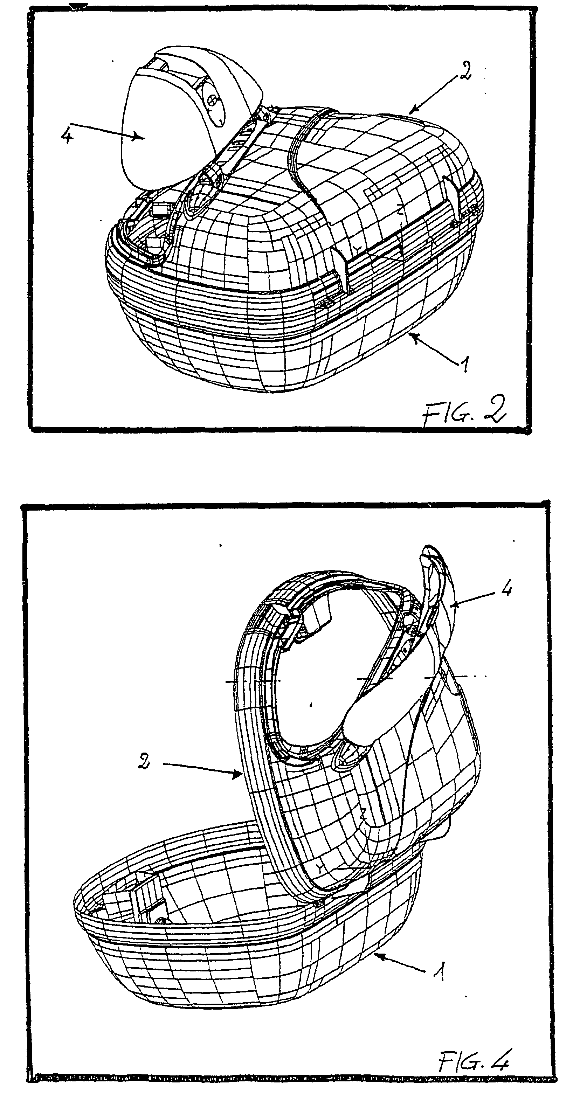

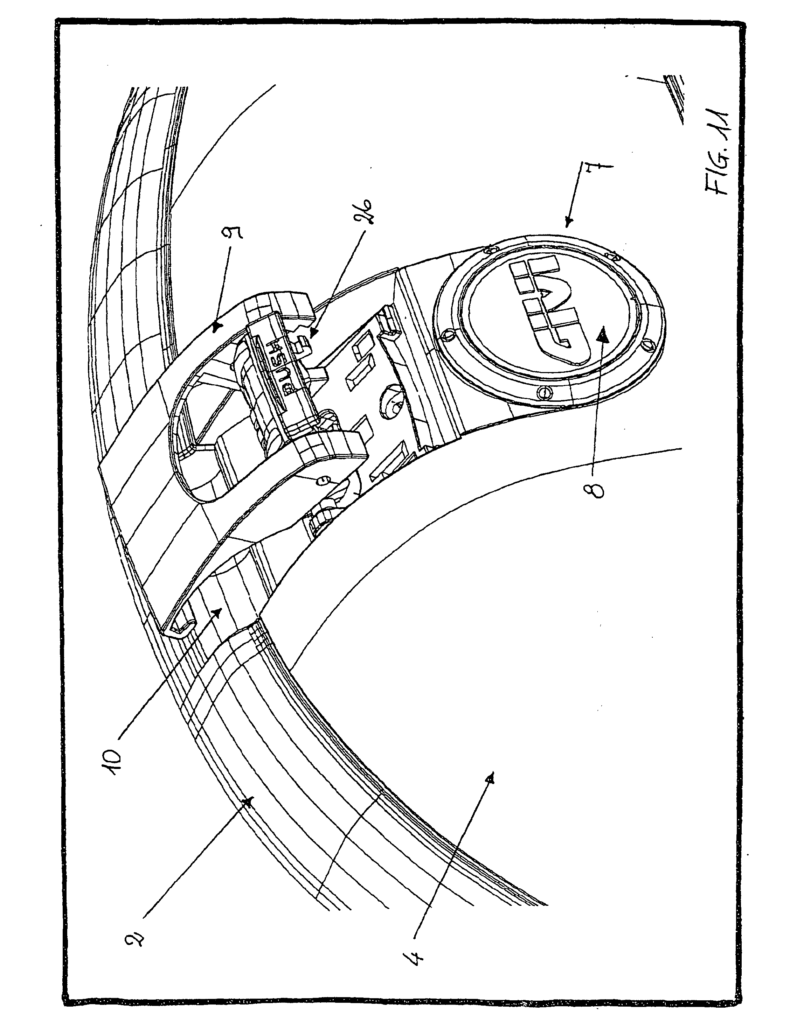

According to the embodiment shown, the cover shell 2 is provided with an access hatch 12 that can be closed by a hatch lid 4 hinged to the cover shell 2. Figures 1 and 3 illustrate the hatch lid 4 in a state closing the hatch 12, while Figures 2 and 4 illustrate the hatch 12 in an open state thereof. Figures 1 to 4 demonstrate that the hatch 12 can be opened and closed independently of the (open or closed) state of the cover shell 2.

As seen in Figure 6, for example, the hatch 12 provided in cover shell 2 is implemented by a wide aperture covered by lid 4. The hatch lid 4 is fixed to the top shell 2 through small blocks 11; these are screwed onto the top shell 2 and, thanks to a pivot pin 13, allow the lid 4 to be opened independently of the top shell 2.

The system shown creates an additional opening for the transport case (see Figures 2 and 4) so that the user can take things out of the case even when the case is mounted on the motorbike, e.g. laterally in a vertical position with the cover shell 2 closed.

The small blocks 11 are not visible from outside since they are hidden in associated seats 14 provided in an ornamental moulding 15 of the cover shell 2.

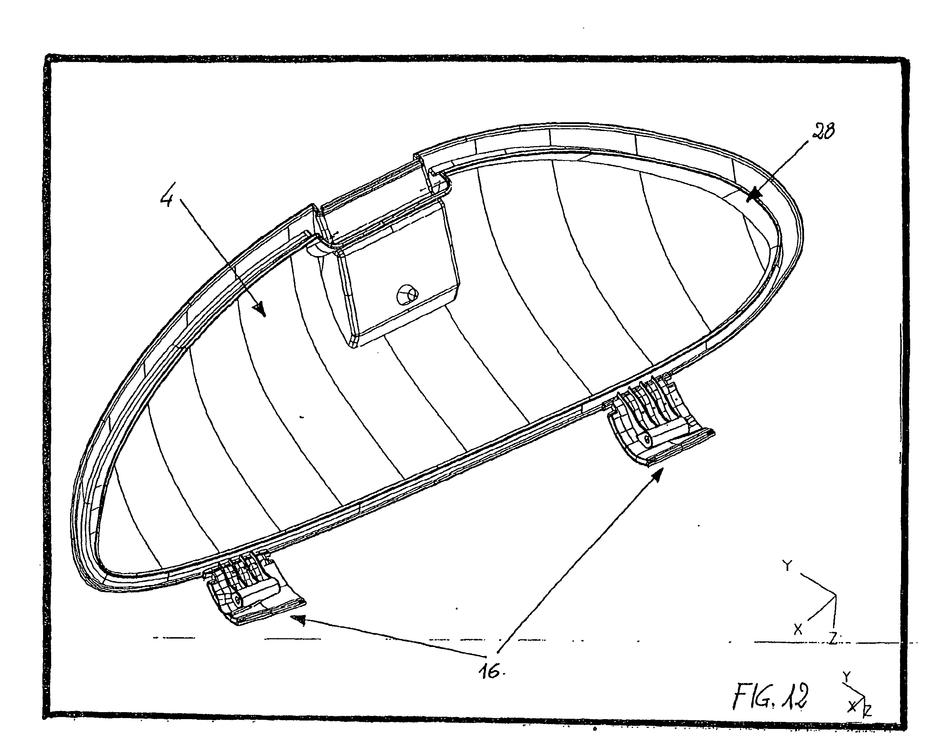

In order to improve the aesthetic appearance, appendices 16 of the lid 4 may be concealed by plates 6 so that when the hatch is dosed, the shape and design of the moulding 15 are continuous, see Figures 5 and 13. Moreover, the moulding may carry a seat 18 to host a trademark 19, e.g. KEYLESS.

A combination lock 9, conventional as such (commonly used for suitcases, for example), may be introduced to ensure a safe locking of the hatch lid 4, see Figure 7. A core mechanism 9E of the combination lock 9 may be supplied from a specialised manufacturer while plastic parts 9A, 9B, 9C and 9D may be specifically designed to fit the characteristics of the mechanism 9E and the aesthetic line of the case.

As stated above, the combination lock 9 consists of five components (see the exploded view according to Figure 8) that have the following features and functions:
- A base portion 9A comprises the seat of a screw 20 which allows to fix the combination lock 9 to the hatch lid 4, and holes 21 for a pivot that hinges part 9C.
- A hooking tooth 9B is arranged to engage a counter-tooth placed in a special seat 10 on the cover shell 2. Further, hooking tooth 9B hinges a part 9C by means of a pivot pin that passes through holes 22.
- A mechanism seat 9C houses the core mechanism 9E. The numbered thumb wheels of the combination lock project through its windows. Part 9C is connected to parts 9A and 9B thanks to pivot pins that pass through holes 24 and 25.
- A push button 9D may be pressed to rock and release the hooking tooth 9B such as to open the hatch lid 4 when the aligned numbers composed form the right combination. This button 9D is placed between parts 9A and 9C and is joined to the other components by the pivot pin that passes through the holes 25.
- Core mechanism 9E may be a 3-digit combination mechanism commonly used on suitcases.

Figures 10 and 11 show the two states of the combination lock 9.

In Figure 10, the lock 9 is in its closed state. Tooth 9B is hooked into the counter-tooth placed in the seat 10 on the cover shell 2. In this state, it is advisable for security reasons- to change the position of the numbers in order to avoid other people watching the combination and opening the hatch lid 4. Conversely, when the numbers do not form the combination chosen by the user, it is not possible to push the button 9D and release the combination lock 9.

Figure 11 shows the open combination lock 9. To open the hatch lid 4, it is necessary to compose the correct combination with the help of the numbered thumb wheels, to push the button 9D to release its feet 26 from the base portion 9A, and to rotate the whole group upwardly in order to allow the hooking tooth 9B to disengage from the counter-tooth of the cover shell. Subsequently, a couple of torsion springs may be arranged to complete the movement opening the hatch lid 4.

In a preferred embodiment, it is easy to close the lid locking mechanism since the user only has to hook the tooth 9B onto the counter-tooth of the cover shell 2 and to rock the lock body 9B downward. At this point, the lock may close automatically thanks to the two springs that push the button 9D backward until the feet 26 engage the base 9A.

An important aspect of a motorbike case is water tightness. This is particularly true for side cases if the borderline between the base shell 1 and the cover shell 2 faces upwardly and is exposed directly to rain.

Therefore, in addition to the usual gasket between the base shell 1 and the cover shell 2, another gasket for the hatch 12 is preferably introduced. This gasket (see Figures 12 and 13) is placed in a groove 27 formed in the cover shell 2 and is pressed by a matching rib 28 of the hatch lid 4. The groove 27 also works as a drip to help drain the water and improve the efficiency of the gasket

For reasons of aerodynamics and aesthetics, the transport case may be asymmetric. In that situation, a left version and a right version are preferably designed. Figure 5 depicts the version to be mounted on the left side of the motorbike.

In order to further improve the aesthetics of the transport case, the cover shell 2 may be designed with a seat 17 for a red transparent element 5 which simulates a turn signal or tail light. On the hatch lid 4, under the combination lock 9, a crown may be applied for inserting a company logo 8, e.g. GIVI.

The above description of a presently preferred embodiment shows that a number of innovative and advantageous functions can be realised in the access system of a motorbike transport case using the principles disclosed by the subject application and defined in the appended claims.

### List of reference signs

- 1: base shell, or bottom shell, of the transport case
- 2: cover shell, or top shell, of the transport case
- 3: cover locking mechanism
- 4: hatch lid
- 5: reflector / indicator
- 6: lid plate
- 7: decorative crown for GIVI logo
- 8: GIVI logo
- 9: combination lock
- 9A: base
- 9B: hooking tooth
- 9C: mechanism seat
- 9D: button
- 9E: mechanism
- 10: seat of the counter-tooth for hooking the combination lock
- 11: small blocks to fix the hatch lid
- 12: aperture in the top shell to form the access hatch
- 13: pivot pins of the lid blocks
- 14: seat for the lid blocks
- 15: ornamental moulding
- 16: appendices of the lid
- 17: seat of indicator
- 18: seat of KEYLESS mark
- 19: KEYLESS mark
- 20: seat of base screw
- 21: holes for base pivot
- 22: holes for the hooking tooth pivot
- 23: windows for numbered thumb wheels
- 24: holes for the pivot of the mechanism seat pivot also passing through holes 21
- 25: holes for the pivot of the mechanism seat pivot also passing through holes 22
- 26: small feet for hooking the button
- 27: additional gasket groove
- 28: lid rib for gasket

## Claims

1. A motorbike transport case comprising:
- a base shell (1) arranged to be fitted to a motorbike or a carrier plate mounted on a motorbike; and
- a cover shell (2) hinged to the base shell (1) such that the cover shell (2) can be pivoted away from the base shell (1) to open the transport case and pivoted toward the base shell (1) to close the transport case;
**characterised by**
- a hatch (12) provided in the cover shell (2), and
- a hatch lid (4) hinged to the cover shell (2) such that the hatch lid (4) can be pivoted away from the hatch (12) to open the hatch (12) and pivoted toward the hatch (12) to close the hatch (12).

2. The motorbike transport case according to claim 1, **characterised by** a lid locking mechanism (9) arranged to selectively lock the hatch lid (4) to the hatch (12) and unlock the hatch lid (4) from the hatch (12).

3. The motorbike transport case according to claim 2, **characterised in that** the lid locking mechanism (9) comprises a pivotable or rockable hook means (9B) arranged to selectively hook the hatch lid (4) to the hatch (12) and unhook the hatch lid (4) from the hatch (12).

4. The motorbike transport case according to claim 2 or 3, **characterised in that** the lid locking mechanism (9) is releasable by a key or combination lock, preferably by a combination lock comprising a plurality of numbered thumb wheels (9E).

5. The motorbike transport case according to any of the preceding claims, **characterised by** a cover locking mechanism (3), preferably operable by a key, said cover locking mechanism (3) arranged to selectively lock the cover shell (2) to the base shell (1) and unlock the cover shell (2) from the base shell (1).

6. The motorbike transport case according to any of the preceding claims, **characterised in that** the edge (27) of the hatch (12) and the edge (28) of the hatch lid (4) are arranged to provide a watertight sealing when the hatch (12) is closed by the hatch lid (4).

7. The motorbike transport case according to any of the preceding claims, **characterised in that** the hatch lid (4) is hinged to the hatch (12) by at least one hinge (6, 11, 13) which in the closed state of the hatch (12) is flushed with the outline (15) of the transport case.

8. The motorbike transport case according to any of the preceding claims, **characterised in that** the base shell (1) of the transport case is arranged to be fitted, preferably in a detachable manner, to a lateral structure of a motorbike.

9. The motorbike transport case according to any of the preceding claims, **characterised in that** the hatch (12) is arranged in a top portion of the transport case.

## Patentansprüche

1. Motorradkoffer mit:
- einer Basisschale (1), die zum Anordnen an einem Motorrad oder einer an einem Motorrad angebrachten Trägerplatte angepasst ist,
- einer Abdeckungsschale (2), die an der Basisschale (1) derart angelenkt ist, dass die Abdeckungsschale (2) zum Öffnen des Koffers von der Basisschale (1) weg geschwenkt und zum Schließen des Koffers zur Basisschale (1) hin geschwenkt werden kann,
**gekennzeichnet durch**
- eine Luke (12), die in der Abdeckungsschale (2) vorgesehen ist, und
- einen Lukendeckel (4), der an der Abdeckungsschale (2) derart angelenkt ist, dass der Lukendeckel (4) zum Öffnen der Luke (12) von der Luke (12) weg geschwenkt und zum Schließen der Luke (12) zu der Luke (12) hin geschwenkt werden kann.

2. Motorradkoffer nach Anspruch 1, **gekennzeichnet durch** einen Deckelsperrmechanismus (9), der zum wahlweisen Versperren des Lukendeckels (4) an die Luke (12) und Entsperren des Lukendeckels (4) von der Luke (12) vorgesehen ist.

3. Motorradkoffer nach Anspruch 2, **dadurch gekennzeichnet, dass** der Deckelsperrmechanismus (9) ein schwenkbares oder kippbares Hakenelement (9B) umfasst, das zum wahlweisen Festhaken des Lukendeckels (4) an die Luke (12) und Loshaken des Lukendeckels (4) von der Luke (12) vorgesehen ist.

4. Motorradkoffer nach Anspruch 2 oder 3, **dadurch gekennzeichnet, dass** der Deckelsperrmechanismus (9) durch einen Schlüssel oder ein Kombinationsschloss freigebbar ist, vorzugsweise durch ein Kombinationsschloss, das mehrere nummerierte Einstellräder (9E) umfasst.

5. Motorradkoffer nach einem der vorhergehenden Ansprüche, **gekennzeichnet durch** einen Abdeckungssperrmechanismus (3), vorzugsweise bedienbar **durch** einen Schlüssel, der zum wahlweisen Versperren der Abdeckungsschale (2) an die Basisschale (1) und Entsperren der Abdeckungsschale (2) von der Basisschale (1) angepasst ist.

6. Motorradkoffer nach einem der vorhergehenden Ansprüche, **dadurch gekennzeichnet, dass** mit dem Rand (27) der Luke (12) und dem Rand (28) des Luckendeckels (4) eine wasserdichte Abdichtung gebildet ist, wenn die Luke (12) mit dem Luckendeckel (4) verschlossen ist.

7. Motorradkoffer nach einem der vorhergehenden Ansprüche, **dadurch gekennzeichnet, dass** der Lukendeckel (4) an der Luke (12) mit wenigstens einem Gelenk (6, 11, 13) angelenkt ist, das bei geschlossenem Zustand der Luke (12) mit der Kontur (15) des Koffers bündig abschließt.

8. Motorradkoffer nach einem der vorhergehenden Ansprüche, **dadurch gekennzeichnet, dass** die Basisschale (1) des Koffers dazu angepasst ist an eine Seitenstruktur des Motorrads angebracht zu werden, vorzugsweise in einer abnehmbaren Weise.

9. Motorradkoffer nach einem der vorhergehenden Ansprüche, **dadurch gekennzeichnet, dass** die Luke (12) in einem oberen Bereich des Koffers angeordnet ist.

## Revendications

1. Mallette de transport pour moto comprenant :
- une coque de base (1) agencée pour être adaptée sur une moto ou sur une plaque de support montée sur une moto; et
- une coque de couverture (2) articulée à la coque de base (1) de sorte que la coque de couverture (2) puisse pivoter en s'éloignant de la coque de base (1) afin d'ouvrir la mallette de transport et pivoter vers la coque de base (1) afin de fermer la mallette de transport ;
**caractérisée par**
- une trappe (12) prévue dans la coque de recouvrement (2), et
- un couvercle de trappe (4) articulé à la coque de recouvrement (2) de sorte que le couvercle de trappe (4) puisse pivoter en s'éloignant de la trappe (12) afin d'ouvrir la trappe (12) et pivoter vers la trappe (12) afin de fermer la trappe (12).

2. Mallette de transport pour moto selon la revendication 1, **caractérisée par** un mécanisme de verrouillage de couvercle (9) agencé pour, de manière sélective, verrouiller le couvercle de trappe (4) à la trappe (12) et déverrouiller le couvercle de trappe (4) de la trappe (12).

3. Mallette de transport pour moto selon la revendication 2, **caractérisée en ce que** le mécanisme de verrouillage de couvercle (9) comprend des moyens d'accrochage pivotants ou basculants (9B) agencés pour, de manière sélective, accrocher le couvercle de trappe (4) à la trappe (12) et décrocher le couvercle de trappe (4) de la trappe (12).

4. Mallette de transport pour moto selon la revendication 2 ou 3, **caractérisée en ce que** le mécanisme de verrouillage de couvercle (9) peut être débloqué par une clé ou une serrure à combinaison, de préférence par une serrure à combinaison comprenant une pluralité de molettes numérotées (9E).

5. Mallette de transport pour moto selon l'une quelconque des revendications précédentes, **caractérisée par** un mécanisme de verrouillage d'élément de recouvrement (3), de préférence pouvant être actionné par une clé, ledit mécanisme de verrouillage d'élément de recouvrement (3) étant agencé pour, de manière sélective, verrouiller la coque de recouvrement (2) à la coque de base (1) et déverrouiller la coque de recouvrement (2) de la coque de base (1).

6. Mallette de transport pour moto selon l'une quelconque des revendications précédentes, **caractérisée en ce que** le bord (27) de la trappe (12) et le bord (28) du couvercle de trappe (4) sont agencés de manière à assurer une étanchéité à l'eau lorsque la trappe (12) est fermée par le couvercle de trappe (4).

7. Mallette de transport pour moto selon l'une quelconque des revendications précédentes, **caractérisée en ce que** le couvercle de trappe (4) est articulé à la trappe (12) par au moins une charnière (6, 11, 13) qui, dans l'état fermé de la trappe (12), est au même niveau que le contour (15) de la mallette de transport.

8. Mallette de transport pour moto selon l'une quelconque des revendications précédentes, **caractérisée en ce que** la coque de base (1) de la mallette de transport est agencée pour être adaptée, de préférence de manière détachable, sur une structure latérale d'une moto.

9. Mallette de transport pour moto selon l'une quelconque des revendications précédentes, **caractérisée en ce que** la trappe (12) est agencée dans une partie supérieure de la mallette de transport.
